# FASCICULE DE BREVET EUROPEEN

(11) **EP 3 344 538 B1**
(45) Date de publication et mention de la délivrance du brevet: **18.03.2020**
(21) Numéro de dépôt: 16767330.0
(22) Date de dépôt: 02.09.2016
(51) Int. Cl.: B64C 27/00, B64C 27/06, B64C 29/00, B64C 15/14

(54) **HELICOPTÈRE EQUIPÉ D'UN DISPOSITIF D'ASSISTANCE D'URGENCE À LA SUSTENTATION**
HUBSCHRAUBER MIT EINER VORRICHTUNG ZUR NOTHUBUNTERSTÜTZUNG
HELICOPTER EQUIPPED WITH A DEVICE FOR EMERGENCY LIFT ASSISTANCE

(30) Priorité: 04.09.2015 FR 1558230
(43) Date de publication de la demande: 11.07.2018
(73) Titulaire: Safran Helicopter Engines, 64510 Bordes (FR)
(72) Inventeur: SEINTURIER, Eric Pierre, 77550 Moissy-Cramayel (FR); THIRIET, Romain, 77550 Moissy-Cramayel (FR); MERCIER-CALVAIRAC, Fabien, 77550 Moissy-Cramayel (FR)
(74) Mandataire: Gevers & Orès
(86) Numéro de dépôt international: PCT/FR2016/052182
(87) Numéro de publication internationale: WO 2017/037401

(56) Documents cités:
- EP-A1- 1 160 159
- US-A- 4 473 199
- US-A- 4 676 457
- US-B1- 8 074 919

## Description

### 1. Domaine technique de l'invention

L'invention concerne les hélicoptères, en particulier les hélicoptères équipés de dispositifs d'assistance d'urgence à la sustentation en cas de panne d'un moteur principal.

### 2. Arrière-plan technologique

US4676457 et EP1160159 décrivent des hélicoptères avec des éléments de sécurité.

Un hélicoptère comporte classiquement un rotor principal de sustentation et de propulsion formant une voilure tournante, mise en mouvement par une chaine motrice comprenant une boite de transmission principale et au moins un moteur principal, tel qu'un turbomoteur. La boite de transmission principale de l'hélicoptère a pour vocation, notamment, de transmettre les efforts de sustentation du rotor à l'ensemble de la structure de l'hélicoptère. Un hélicoptère comporte également un moyen anti-couple qui est souvent formé par un deuxième rotor arrière, couplé à la chaine motrice.

Il existe des hélicoptères monomoteurs, c'est-à-dire des hélicoptères dont la chaine motrice ne comporte qu'un seul moteur. Il existe également des hélicoptères multi-moteurs, en particulier des hélicoptères bimoteurs ou trimoteurs, c'est-à-dire des hélicoptères dont la chaine motrice comporte plusieurs moteurs.

Quel que soit le type d'hélicoptère concerné (monomoteur ou multi-moteurs), une défaillance d'un moteur de la chaine motrice réduit la puissance fournie par la chaine motrice au rotor principal de sustentation et de propulsion de l'hélicoptère, ce qui peut avoir des conséquences néfastes pour l'hélicoptère et ses passagers.

Par exemple, dans le cas d'un hélicoptère monomoteur, une perte de puissance du moteur principal impose au pilote de procéder à une délicate manœuvre d'autorotation pour un atterrissage d'urgence. Les statistiques montrent que dans certaines conditions, cette manœuvre peut conduire à un atterrissage « dur », provoquant un endommagement sérieux de l'hélicoptère .

Il a donc été proposé, notamment par le demandeur, d'installer sur l'hélicoptère un moyen capable de fournir un complément de puissance de manière très rapide, pour sécuriser la manœuvre d'autorotation d'un hélicoptère monomoteur en empêchant une chute de tour du rotor dans l'une quelconque des phases de cette manœuvre.

Dans le cas d'un hélicoptère multi-moteurs, il a également été proposé, notamment par le demandeur, différentes solutions pour apporter un surplus de puissance permettant de maintenir une puissance suffisante au niveau du rotor de l'hélicoptère. Par exemple, l'une des solutions proposées consiste à injecter du fluide dans les turbines en fonctionnement pour en augmenter temporairement la puissance et pallier ainsi la perte ou la défaillance d'un moteur. Une autre solution consiste à assister mécaniquement les turbines en fonctionnement par un apport de puissance mécanique sur le générateur de gaz de cette turbine en fonctionnement. Une autre solution consiste à apporter un surplus de puissance directement sur le rotor de l'hélicoptère ou sur la boite de transmission principale de la chaine motrice.

Toutes les solutions proposées, pour les applications monomoteurs ou multimoteurs, visent à fournir un surplus de puissance sur la chaine motrice de l'hélicoptère pour apporter au final un surplus de puissance au niveau du rotor principal, ce qui permet de limiter la chute de tour du rotor, et conserver ainsi une sustentation suffisante pour maintenir l'hélicoptère en vol ou du moins ralentir la chute de l'hélicoptère.

L'un des inconvénients partagés par ces différentes solutions réside dans le fait qu'une panne sur la chaîne cinématique du rotor principal (Boite de transmission principale, rotor, contrôle de pas, rotor de queue, ....) de sustentation ne peut pas être compensée par un apport de puissance. Aucune des solutions proposées ne permet donc de pallier une panne sur la chaine cinématique du rotor principal.

En outre, dans le cas d'un hélicoptère multi-moteurs, il est nécessaire de surdimensionner les turbomoteurs pour pouvoir maintenir l'hélicoptère en vol en cas de panne de l'un des moteurs. Ces turbomoteurs surdimensionnés sont pénalisants en termes de masse et de consommation de carburant.

Par ailleurs, il a été proposé, dans le document US 4 676 457 A d'équiper l'hélicoptère d'organes à propulsion intégrés au fuselage afin de limiter la vitesse de la chute. Cependant, en ce qui concerne la solution d'équiper l'hélicoptère de dispositifs additionnels pour pouvoir apporter un surplus de puissance propulsive en cas de besoin, cela impose une architecture plus complexe de l'hélicoptère et de la chaine motrice, et cela alourdit d'autant l'hélicoptère, ce qui est également pénalisant en terme de masse et de consommation de carburant.

Le demandeur a donc cherché une solution nouvelle permettant de pallier les inconvénients des solutions connues.

### 3. Objectifs de l'invention

L'invention vise à fournir un hélicoptère qui peut générer un complément de poussée verticale sans solliciter la chaine motrice de l'hélicoptère.

L'invention vise aussi fournir, dans au moins un mode de réalisation de l'invention, un surplus de puissance en cas de défaillance d'un moteur, indépendamment de la chaine motrice de l'hélicoptère.

L'invention vise aussi à fournir, dans au moins un mode de réalisation de l'invention, un hélicoptère qui peut maintenir un certain niveau de sustentation, y compris en cas de panne du rotor principal de sustentation.

L'invention vise aussi à fournir, dans au moins un mode de réalisation de l'invention, un tel hélicoptère qui n'est pas pénalisé en termes de masse ou de consommation de carburant.

### 4. Exposé de l'invention

Pour ce faire, l'invention concerne un hélicoptère comprenant une ossature structurelle, au moins un rotor principal de sustentation et de propulsion solidaire à ladite ossature structurelle et une chaine motrice de mise en mouvement dudit rotor principal comprenant une boîte de transmission de puissance et au moins un moteur principal.

Un hélicoptère selon l'invention comprend en outre une pluralité de propulseurs d'appoint fixés à ladite ossature structurelle et configurés pour pouvoir apporter un complément de sustentation de l'hélicoptère en cas de défaillance de la chaine motrice de l'hélicoptère.

Un hélicoptère selon l'invention est caractérisé en ce que chaque propulseur d'appoint est monté de manière amovible sur l'ossature structurelle.

Ce complément de sustentation permet notamment de pallier un manque de puissance de la chaîne motrice dans une situation critique.

Dans tout le texte, l'ossature structurelle de l'hélicoptère désigne la structure rigide formée d'organes rigides tels que des cadres, traverses, montants, caissons, arceaux, plaques, etc. assemblés les uns aux autres pour former la cellule de l'hélicoptère.

Un hélicoptère selon l'invention peut donc pallier toutes pannes de sa chaine motrice (boite de transmission de puissance, moteur, rotor, etc.) et maintenir un certain niveau de sustentation par la mise en œuvre de propulseurs d'appoint fixés à l'ossature structurelle de l'hélicoptère. En d'autres termes, un hélicoptère selon l'invention peut générer un complément de poussée verticale, en cas de besoin, sans faire intervenir le rotor de sustentation et de propulsion de l'hélicoptère. Les propulseurs d'appoint d'un hélicoptère selon l'invention forment un dispositif d'assistance d'urgence à la sustentation de l'hélicoptère.

Les propulseurs d'appoint étant indépendants de la chaine motrice, ils sont peu intrusifs et ne modifient pas le comportement de l'hélicoptère en situation normale. De même, ils n'imposent pas une modification de conception d'un hélicoptère.

Un hélicoptère selon l'invention permet également de monter les propulseurs d'appoint uniquement lorsque nécessaire. En particulier, il est alors possible que les propulseurs d'appoint puissent équiper différents hélicoptères. Il est par exemple possible de disposer de quelques propulseurs d'appoint destinés à équiper une pluralité d'hélicoptères d'une flotte d'hélicoptères. Pour chaque mission, les propulseurs d'appoint sont montés sur l'hélicoptère de la flotte sélectionné pour cette mission. Lors d'une mission suivante, si un autre hélicoptère est sélectionné, les mêmes propulseurs peuvent alors être démontés du premier hélicoptère et montés sur l'hélicoptère nouvellement sélectionné.

Un hélicoptère selon l'invention présente une sécurité améliorée par rapport aux hélicoptères connus.

En outre, dans le cas d'un hélicoptère multi-moteurs, l'invention rend caduque le besoin de surdimensionner les moteurs pour pallier une éventuelle défaillance d'un turbomoteur. La consommation spécifique des moteurs principaux est donc améliorée.

Avantageusement et selon l'invention, l'ossature structurelle comprend des cadres supérieurs agencés au voisinage du rotor principal de sustentation et de propulsion, et les propulseurs d'appoint sont fixés sur ces cadres supérieurs.

Selon cette variante avantageuse, les propulseurs d'appoint sont fixés sur des cadres supérieurs de l'ossature structurelle agencés au voisinage du rotor principal. Ces cadres supérieurs transmettent les efforts verticaux de sustentation à la cellule de l'hélicoptère. L'agencement des propulseurs au niveau de la partie supérieure de l'ossature structurelle de l'hélicoptère permet de limiter les risques de retournement ou de perte de contrôle lors de l'activation des propulseurs.

Avantageusement et selon l'invention, les propulseurs d'appoint comprennent des dispositifs pyrotechniques.

Selon cette variante avantageuse, les propulseurs mettent en œuvre des dispositifs pyrotechniques. Ces dispositifs pyrotechniques permettent de générer très rapidement une poussée sans néanmoins présenter un encombrement important. Ces dispositifs pyrotechniques comprennent par exemple un générateur de gaz à propergol solide, un dispositif d'allumage du propergol solide, commandé électriquement et relié à un calculateur de déclenchement du dispositif d'allumage et une tuyère d'éjection des gaz.

Avantageusement et selon l'invention, les propulseurs d'appoint sont configurés pour pouvoir fournir chacun une même puissance propulsive et ils sont agencés et orientés sur l'ossature structurelle de telle sorte qu'ils exercent des forces de poussé selon des directions sécantes en un point unique, dit point de convergence.

Avantageusement et selon cette variante, le point de convergence est agencé au centre du rotor dans le plan des pales du rotor, de telle sorte que la résultante des forces de poussée des propulseurs d'appoint soit verticale, et appliquée en haut d'un mat rotor.

Cet agencement et orientation des propulseurs permettent de générer une résultante des forces de poussée verticale. En outre, le couple appliqué à l'ossature structurelle est nul au niveau du point de convergence, ce qui élimine les risques d'induire une rotation de l'hélicoptère du fait des propulseurs.

Avantageusement et selon l'invention, le point de convergence est le centre de gravité de l'hélicoptère.

Avantageusement, un hélicoptère selon l'invention comprend en outre une unité de commande reliée à chaque propulseur d'appoint et configurée pour commander l'activation de chaque propulseur d'appoint en cas d'une panne sur la chaine motrice de l'hélicoptère.

Cette unité de commande est par exemple un calculateur électronique de régulation de l'hélicoptère (plus connu sous l'acronyme anglais EECU). Ce calculateur est par exemple intégré au dispositif de régulation des turbomoteurs connu sous l'acronyme anglais FADEC, pour *Full Authority Digital Engine Control.* L'unité de commande peut également être reliée à des dispositifs de détection de l'altitude de l'hélicoptère, tel qu'un altimètre, pour commander automatiquement l'activation des propulseurs dès qu'une altitude critique est atteinte en conjonction avec une panne détectée sur un des turbomoteurs de l'hélicoptère. Selon cette variante, l'unité de commande est configurée pour pouvoir activer automatiquement les propulseurs d'appoint à l'approche du sol.

Selon une variante avantageuse de l'invention, l'hélicoptère est équipé de quatre propulseurs d'appoint régulièrement répartis sur l'ossature structurelle.

L'invention concerne également un hélicoptère caractérisé en combinaison par tout ou partie des caractéristiques mentionnées ci-dessus ou ci-après.

### 5. Liste des figures

D'autres buts, caractéristiques et avantages de l'invention apparaîtront à la lecture de la description suivante donnée à titre uniquement non limitatif et qui se réfère aux figures annexées dans lesquelles :
- la figure 1 est une vue schématique d'un hélicoptère destiné à être équipé avec un dispositif d'assistance d'urgence à la sustentation pour former un hélicoptère selon un mode de réalisation de l'invention,
- la figure 2 est une vue schématique partiellement arrachée d'un hélicoptère selon un mode de réalisation de l'invention
- la figure 3 est une vue schématique partiellement arrachée d'un hélicoptère selon un autre mode de réalisation de l'invention.

### 6. Description détaillée d'un mode de réalisation de l'invention

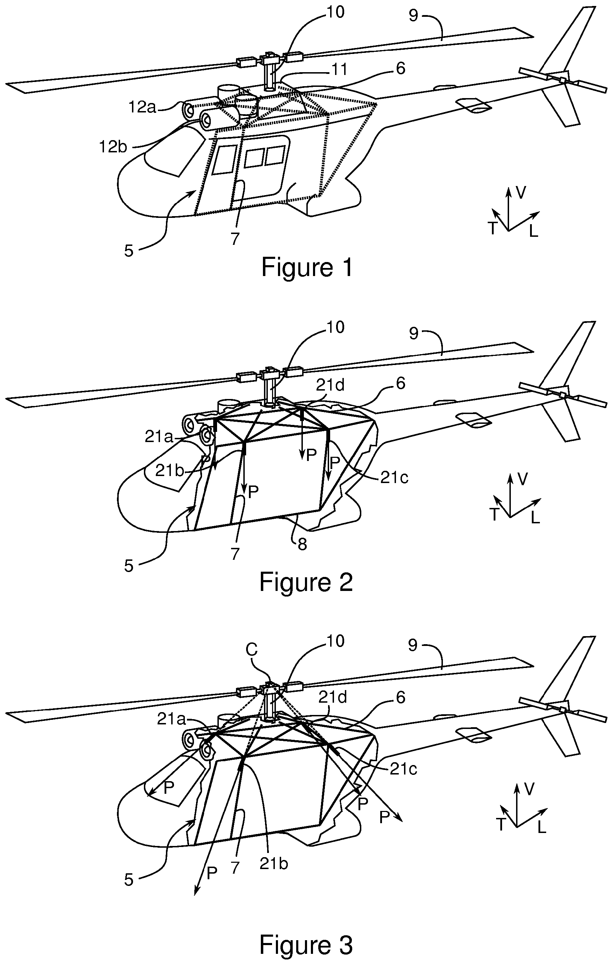

Sur la figure, les échelles et les proportions ne sont pas strictement respectées et ce, à des fins d'illustration et de clarté. Dans toute la description détaillée qui suit en référence aux figures, sauf indication contraire, chaque élément de l'hélicoptère est décrit tel qu'il est agencé lorsque l'hélicoptère est à l'horizontal. Cet agencement est représenté sur les figures 1 à 3.

En outre, les éléments identiques, similaires ou analogues sont désignés par les mêmes références dans toutes les figures. Enfin, les termes longitudinal, transversal et vertical sont utilisés à titre non limitatif en référence au trièdre L, T, V tel que représenté sur les figures. La direction longitudinale correspond à la direction principale de l'hélicoptère.

La figure 1 représente un hélicoptère comprenant une ossature structurelle 5. Cette ossature structurelle 5 est représentée en pointillés sur la figure 1. Cette ossature forme la cellule de l'hélicoptère et comprend des cadres 6 supérieurs, des montants 7, des cadres 8 inférieurs, des traverses, etc. assemblés les uns aux autres pour former la cellule de l'hélicoptère.

L'hélicoptère comprend également un rotor 10 principal de sustentation et de propulsion solidaire de l'ossature structurelle 5. Le rotor 10 est couplé à des pales 9 de sustentation et de propulsion. L'hélicoptère comprend également une chaine motrice de mise en mouvement du rotor principal 10. Cette chaine motrice comprend une boîte 11 de transmission de puissance et deux moteurs 12a, 12b principaux.

La figure 2 est une vue schématique d'un hélicoptère selon un mode de réalisation de l'invention obtenu à partir de l'hélicoptère de la figure 1. Cette vue présente un arrachée pour faire apparaitre les cadres supérieurs, montants, cadres inférieurs, traverses, etc. de l'ossature structurelle 5. Cet hélicoptère comprend en plus des organes et éléments décrits en lien avec la figure 1, quatre propulseurs 21a, 21b, 21c, 21d d'appoint fixés sur les cadres 6 supérieurs de l'ossature structurelle 5. Chaque propulseur est configuré pour pouvoir apporter sur commande un complément de sustentation de l'hélicoptère en cas de défaillance d'un moteur 12a, 12b principal de l'hélicoptère.

Les propulseurs sont par exemple des fusées pyrotechniques comprenant un générateur de gaz à propergol solide, un dispositif d'allumage du propergol solide et une tuyère d'éjection des gaz. Tout autre type de propulseur peut être utilisé pour la mise en œuvre de l'invention.

De préférence, tous les propulseurs sont identiques et sont configurés pour pouvoir fournir la même puissance. Ils sont fixés de façon amovible sur les cadres supérieurs 5 de l'ossature structurelle 5, par exemple par des colliers de fixation équipés de système de type vis-écrou. En outre, ils sont orientés vers le bas de sorte qu'ils exercent une force de poussée vers le bas. La poussée produite par chaque propulseur 21a, 21b, 21c, 21d est représentée schématiquement sur les figures 2 et 3 par une flèche référencée par la lettre P.

Selon un mode de réalisation avantageux, l'apport de sustentation de chaque propulseur est modéré. Pour ce faire, le propulseur est configuré pour que la puissance maximale qu'il puisse produire soit de l'ordre de 20% de la puissance maximale d'un moteur principal de l'hélicoptère, et ce pendant une durée de l'ordre de 30 secondes. Les propulseurs ne visent qu'à ralentir la chute de l'hélicoptère pendant un court instant, au voisinage du sol et non pas d'assurer une poursuite du vol en cas de panne d'un ou plusieurs moteurs principaux de l'hélicoptère.

La figure 3 est une vue schématique d'un hélicoptère selon un autre mode de réalisation de l'invention dans lequel les propulseurs 21a, 21b, 21c, 21d d'appoint sont agencés et orientés sur l'ossature structurelle 5 de telle sorte qu'ils exercent des forces de poussée P selon des directions sécantes en un point unique, dit point de convergence. Ce point est référencé par la lettre C sur la figure 3. La vue de la figure 3 présente également un arrachée pour faire apparaitre les cadres supérieurs, montants, cadres inférieurs, traverses, etc. de l'ossature structurelle 5. Dans le mode de réalisation de la figure 3, le point C de convergence est agencé au centre du rotor 10 dans le plan des pales 9. Selon ce mode de réalisation, la résultante des forces de poussée P des propulseurs 21a, 21b, 21c, 21d d'appoint est verticale, ce qui limite tout risque de retournement et de rotation de l'hélicoptère.

L'activation des propulseurs peut être commandée part une unité de commande reliée à chaque propulseur d'appoint et configurée pour commander l'activation de chaque propulseur d'appoint en cas d'une panne sur la chaine motrice de l'hélicoptère.

Cette unité de commande peut également être reliée à un dispositif de détection de l'altitude de l'hélicoptère tel qu'un altimètre ou tout dispositif équivalent. Cette unité de commande peut également être pilotée manuellement par le pilote au cours de la mission en cas de besoin, par exemple en cas d'urgence, pour éviter un obstacle ou former une mesure évasive à un tir ennemi.

Selon une variante avantageuse, l'axe de poussée des propulseurs peut être orientable par des moyens du type tuyère, volet, pour garantir l'assiette horizontale de l'hélicoptère.

L'invention ne se limite pas aux seuls modes de réalisation décrits. L'invention s'applique également à un hélicoptère monomoteur. L'invention peut également comprendre plus (ou moins) de quatre propulseurs d'appoint pour fournir une assistance d'urgence à la sustentation.

De même, la description détaillée décrit des propulseurs ménagés sur les cadres supérieurs de l'ossature structurelle de l'hélicoptère. Selon d'autres modes de réalisation non représentés, les propulseurs peuvent bien sur être agencés en tout point de l'ossature structurelle, notamment sur les patins de l'hélicoptère.

## Revendications

1. Hélicoptère comprenant une ossature structurelle (5), au moins un rotor (10) principal de sustentation et de propulsion solidaire de ladite ossature structurelle (5) et une chaine motrice de mise en mouvement dudit rotor (10) principal comprenant une boîte (11) de transmission de puissance et au moins un moteur (12a, 12b) principal, comprenant en outre une pluralité de propulseurs (21a, 21b, 21c, 21d) d'appoint fixés à ladite ossature structurelle (5) et configurés pour pouvoir apporter un complément de sustentation de l'hélicoptère en cas de défaillance de la chaine motrice de l'hélicoptère, **caractérisé en ce que** chaque propulseur (21a, 21b, 21c, 21d) d'appoint est monté de manière amovible sur l'ossature structurelle (5).

2. Hélicoptère selon la revendication 1, **caractérisé en ce que** l'ossature structurelle (5) comprend en outre des cadres (6) supérieurs agencés au voisinage du rotor (10) principal de sustentation et de propulsion, et **en ce que** lesdits propulseurs (21a, 21b, 21c, 21d) d'appoint sont fixés sur lesdits cadres (6) supérieurs.

3. Hélicoptère selon l'une des revendications 1 ou 2, **caractérisé en ce que** lesdits propulseurs (21a, 21b, 21c, 21d) d'appoint comprennent des dispositifs pyrotechniques.

4. Hélicoptère selon l'une des revendications 1 à 3, **caractérisé en ce que** lesdits propulseurs (21a, 21b, 21c, 21d) d'appoint sont configurés pour pouvoir fournir chacun une même puissance propulsive et **en ce qu'**ils sont agencés et orientés sur ladite ossature structurelle (5) de telle sorte qu'ils exercent des forces de poussée selon des directions sécantes en un point unique, dit point (C) de convergence.

5. Hélicoptère selon la revendication 4, **caractérisé en ce que** ledit point (C) de convergence est agencé au centre du rotor (10) dans le plan des pales (9) du rotor, de telle sorte que la résultante des forces de poussée des propulseurs d'appoint soit verticale et appliquée en haut d'un mat rotor.

6. Hélicoptère selon la revendication 4, **caractérisé en ce que** ledit point (C) de convergence est le centre de gravité de l'hélicoptère.

7. Hélicoptère selon l'une des revendications 1 à 6, **caractérisé en ce qu'**il comprend une unité de commande reliée à chaque propulseur (21a, 21b, 21c, 21d) d'appoint et configurée pour commander l'activation de chaque propulseur (21a, 21b, 21c, 21d) d'appoint en cas d'une panne sur la chaine motrice de l'hélicoptère.

8. Hélicoptère selon la revendication 7, **caractérisé en ce que** ladite unité de commande est configurée pour pouvoir activer automatiquement les propulseurs (21a, 21b, 21c, 21d) d'appoint à l'approche du sol.

9. Hélicoptère selon l'une des revendications 1 à 8, **caractérisé en ce qu'**il comprend quatre propulseurs (21a, 21b, 21c, 21d) d'appoint régulièrement répartis sur ladite ossature structurelle (5).

## Patentansprüche

1. Hubschrauber, umfassend ein strukturelles Grundgerüst (5), mindestens einem Haupthub- und Antriebsrotor (10), der mit dem strukturellen Grundgerüst (5) fest verbunden ist, und eine Antriebskette zum In-Bewegung-Setzen des Hauptrotors (10), umfassend ein Kraftübertragungsgetriebe (11) und mindestens einen Hauptmotor (12a, 12b), weiter umfassend eine Vielzahl von zusätzlichen Propellern (21a, 21b, 21c, 21d), die an dem strukturellen Grundgerüst (5) befestigt und konfiguriert sind, um bei Ausfall der Antriebskette des Hubschraubers eine Hubergänzung des Hubschraubers bereitstellen zu können, **dadurch gekennzeichnet, dass** jeder zusätzliche Propeller (21a, 21b, 21c, 21d) abnehmbar am strukturellen Grundgerüst (5) montiert ist.

2. Hubschrauber nach Anspruch 1, **dadurch gekennzeichnet, dass** das strukturelle Grundgerüst (5) weiter obere Rahmen (6) umfasst, die in der Nähe des Haupthub- und Antriebsrotors (10) angeordnet sind, und dass die zusätzlichen Propeller (21a, 21b, 21c, 21d) an den oberen Rahmen (6) befestigt sind.

3. Hubschrauber nach einem der Ansprüche 1 oder 2, **dadurch gekennzeichnet, dass** die zusätzlichen Propeller (21a, 21b, 21c, 21d) pyrotechnische Vorrichtungen umfassen.

4. Hubschrauber nach einem der Ansprüche 1 bis 3, **dadurch gekennzeichnet, dass** die zusätzlichen Propeller (21a, 21b, 21c, 21d) konfiguriert sind, um jeweils eine gleiche Antriebsleistung bereitstellen zu können, und dadurch, dass sie auf dem strukturellen Grundgerüst (5) so angeordnet und ausgerichtet sind, dass sie an einem einzigen Punkt, der Konvergenzpunkt (C) genannt wird, Schubkräfte in Sekantenrichtungen ausüben.

5. Hubschrauber nach Anspruch 4, **dadurch gekennzeichnet, dass** der Konvergenzpunkt (C) in der Mitte des Rotors (10) in der Ebene der Schaufeln (9) des Rotors angeordnet ist, so dass die Resultierende aus den Schubkräften der zusätzlichen Propeller vertikal verläuft und an der Spitze eines Rotorsmastes aufgebracht wird.

6. Hubschrauber nach Anspruch 4, **dadurch gekennzeichnet, dass** der Konvergenzpunkt (C) der Schwerpunkt des Hubschraubers ist.

7. Hubschrauber nach einem der Ansprüche 1 bis 6, **dadurch gekennzeichnet, dass** er eine Steuereinheit umfasst, die mit jedem zusätzlichen Propeller (21a, 21b, 21c, 21d) verbunden und konfiguriert ist, um die Aktivierung jedes zusätzlichen Propellers (21a, 21b, 21c, 21d) im Falle einer Panne an der Antriebskette des Hubschraubers zu steuern.

8. Hubschrauber nach Anspruch 7, **dadurch gekennzeichnet, dass** die Steuereinheit konfiguriert ist, um die zusätzlichen Propeller (21a, 21b, 21c, 21d) beim Annähern an den Boden automatisch aktivieren zu können.

9. Hubschrauber nach einem der Ansprüche 1 bis 8, **dadurch gekennzeichnet, dass** er vier zusätzliche Propeller (21a, 21b, 21c, 21d) umfasst, die regelmäßig über das strukturelle Grundgerüst (5) verteilt sind.

## Claims

1. Helicopter comprising a structural framework (5), at least one main rotor (10) for lift and propulsion integral with said structural framework (5) and a drive train for moving said main rotor (10) comprising a power transmission gearbox (11) and at least one main motor (12a, 12b), further comprising a plurality of booster power units (21a, 21b, 21c, 21d) fixed to said structural framework (5) and configured to be able to supply extra lift to the helicopter in case of failure of the drive train of the helicopter, **characterised in that** each booster power unit (21a, 21b, 21c, 21d) is removably mounted on the structural framework (5).

2. Helicopter according to claim 1, **characterised in that** the structural framework (5) further comprises upper frames (6) arranged close to the main lift and propulsion rotor (10), and **in that** said booster power units (21a, 21b, 21c, 21d) are fixed on said upper frames (6).

3. Helicopter according to one of claims 1 or 2, **characterised in that** said booster power units (21a, 21b, 21c, 21d) comprise pyrotechnic devices.

4. Helicopter according to one of claims 1 to 3, **characterised in that** said booster power units (21a, 21b, 21c, 21d) are configured to each be able to supply the same propulsive power and **in that** they are arranged and oriented on said structural framework (5) such that they exert thrust forces according to directions intersecting at a single point, termed convergence point (C).

5. Helicopter according to claim 4, **characterised in that** said convergence point (C) is arranged at the centre of the rotor (10) in the plane of the blades (9) of the rotor, such that the resulting thrust forces of the booster power units are vertical and applied at the top of a rotor mast.

6. Helicopter according to claim 4, **characterised in that** said convergence point (C) is the centre of gravity of the helicopter.

7. Helicopter according to one of claims 1 to 6, **characterised in that** it comprises a control unit connected to each booster power unit (21a, 21b, 21c, 21d) and configured to control the activation of each booster power unit (21a, 21b, 21c, 21d) in case of a failure in the helicopter drive train.

8. Helicopter according to claim 7, **characterised in that** said control unit is configured to be able to automatically activate the booster power unit (21a, 21b, 21c, 21d) approaching the ground.

9. Helicopter according to one of claims 1 to 8, **characterised in that** it comprises four booster power units (21a, 21b, 21c, 21d) regularly distributed on said structural framework (5).
